Europäisches Patentamt

European Patent Office

Office européen des brevets

(19)

(11) Numéro de publication : **0 501 891 A1**

(12) **DEMANDE DE BREVET EUROPEEN**

(21) Numéro de dépôt : **92400518.4**

(22) Date de dépôt : **27.02.92**

(51) Int. Cl.⁵ : **A23C 19/064,** A23C 19/14,
A23C 19/068, A23C 19/16

(30) Priorité : **28.02.91 FR 9102424**

(43) Date de publication de la demande :
**02.09.92 Bulletin 92/36**

(84) Etats contractants désignés :
**CH DE IT LI NL**

(71) Demandeur : **INSTITUT NATIONAL DE LA
RECHERCHE AGRONOMIQUE (INRA)
147, rue de l'Université
F-75341 Paris Cédéx 07 (FR)**

(72) Inventeur : **Dasen, André
10, rue du Schweitzer
F-39800 Poligny (FR)**
Inventeur : **Duboz, Gabriel
Quartier Saillard
F-39600 Mesnay (FR)**
Inventeur : **Grappin, Rémy
Chemin des 4 vents
F-39800 Poligny (FR)**

(74) Mandataire : **Phélip, Bruno et al
c/o Cabinet Harlé & Phélip 21, rue de La
Rochefoucauld
F-75009 Paris (FR)**

(54) **Produits fromagers à pâte pressée cuite à croute amincie et leur procédé d'obtention.**

(57)    Produits fromagers à pâte pressée cuite possédant une croûte propre et poreuse se distinguant des fromages traditionnels qui possèdent une croûte dure.

Ces produits sont obtenus par un procédé comprenant deux étapes de salage, chaque étape de salage étant suivie par une étape d'affinage sous film plastique perméable aux gaz et à la vapeur d'eau. La seconde étape d'affinage peut également être effectuée selon une technique d'affinage traditionnelle.

DEMOULAGE DU FROMAGE

PREMIERE IMMERSION DANS DE LA SAUMURE PENDANT 36 HEURES

RESSUYAGE DE LA CROUTE

MISE SOUS FILM MICROPERFORE

CONSERVATION EN CAVE FROIDE A 10-14˚C DURANT UN MOIS (PREAFFINAGE)

ELIMINATION DES FILMS DES FROMAGES

DEUXIEME IMMERSION DANS DE LA SAUMURE PENDANT 36 HEURES

RESSUYAGE DE LA CROUTE

MISE SOUS FILM MICROPERFORE

CONSERVATION EN CAVE CHAUDE à 16-18˚C DURANT 40 à 60 JOURS (AFFINAGE EN CAVE CHAUDE)

CONSERVATION EN CAVE FROIDE à 4-10˚C DURANT 30 à 120 JOURS (AFFINAGE-STOCKAGE EN CAVE FROIDE)

FIG.1

EP 0 501 891 A1

La présente invention a pour objet des produits fromagers à pâte pressée cuite à croûte amincie .

Elle concerne également un procédé d'obtention desdits produits fromagers .

La fabrication traditionnelle des fromages à pâte cuite sera illustrée ci-après à propos du Comté .

La première étape consiste à faire cailler le lait en ajoutant un levain et de la présure . Lorsque le caillé est suffisamment consistant , le gel est découpé en petits fragments .

On réalise ensuite une opération de brassage qui dure environ 80 minutes pendant laquelle la masse du caillé est chauffée à une température de 52-55°C . Ce traitement favorise la séparation du lactosérum des grains de caillé .

Le fromage est ensuite séparé du lactosérum par une opération manuelle ou mécanique . Lorsque cette opération est effectuée manuellement, le fromager sépare les grains de caillé du lactosérum à l'aide d'une toile de lin. Il existe également des procédés mécaniques qui permettent de séparer les grains du lactosérum (soutirage sous-vide , pompe à caillé ) . Le fromage ainsi emmailloté dans sa toile de lin est alors placé dans un moule où il prend sa forme caractéristique de meule .

Le fromage est maintenu sous presse dans les moules pendant une durée de 6 à 18 heures .

Après démoulage, les meules sont conservées en cave froide ( 12 à 14°C) pendant 3 à 4 semaines . Pendant cette période que l'on qualifie de pré-affinage, les meules, dans l'affinage traditionnel, sont salées au gros sel , frottées et retournées environ tous les deux jours .

Ce sont ces opérations de frottage et de salage qui sont poursuivies pendant toute la durée de l'affinage afin de permettre la formation de la croûte caractéristique du Comté . Les meules sont ensuite placées en cave chaude , à une température de l'ordre de 16 à 18°C pendant 40 à 60 jours . Pendant cet affinage en cave chaude , les meules sont périodiquement retournées et frottées au sel deux fois par semaine .

Pour obtenir l'appellation Comté , la durée d'affinage doit être au moins égale à 90 jours , période de pré-affinage comprise .

Quand l'affinage en cave chaude est terminé, les meules sont transportées en cave froide ( + 4°C à + 7°C) où elles sont conservées jusqu'à la vente . Les opérations de retournement , salage , frottage des meules se poursuivent à raison d'une fois par semaine ou une fois toutes les deux semaines .

Au cours de cette phase d'affinage qui dure entre 90 et 180 jours , la croûte du fromage se forme par salage et frottage et le fromage absorbe progressivement une quantité importante de sel qui , en fin d'affinage, est de l'ordre de 400 à 1200 mg pour 100 grammes de fromage .

Le salage est une étape importante de la fabrication du fromage ; cette phase de fabrication est réalisée sur tous les fromages qui doivent être conservés longtemps .

Le salage permet la formation d'une croûte à la périphérie du fromage . En outre , cette opération permet de compléter l'égouttage du caillé , et se traduit par une poursuite de l'exsudation du lactosérum, principalement au niveau de la croûte .

Le salage présente d'autre part, l'avantage de rendre le fromage plus sapide et joue un rôle d'exhausteur du goût du produit . Il a aussi un rôle de sélection des bactéries et modifie l'activité des systèmes enzymatiques .

Différentes techniques de salage sont utilisées pour les fromages à pâte cuite . On distingue :

– le salage en saumure dans lequel le fromage est salé par immersion dans une saumure renfermant entre 240 et 270 g de chlorure de sodium par litre d'eau . La plupart des fromages à pâte molle, à pâte pressée ainsi que l'Emmental , qui est un fromage à pâte pressée cuite , sont salés par cette technique . Généralement la durée de salage de l'Emmental est de 24 à 48 heures selon les fabricants ,

– le salage au gros sel , dans lequel des grains de sel déposés sur la surface du fromage absorbent l'humidité de l'air et fondent . Lorsque le sel est en partie fondu , la meule de fromage est frottée manuellement avec un chiffon de laine , ce qui permet de répartir le sel sur toute la surface du fromage . Actuellement le Comté est traditionnellement salé par cette méthode . Au début du 20ème siècle , le Comté était en certaines périodes de l'année salé en saumure , mais cette pratique n'a cours que très rarement . Les textes officiels réglementant la fabrication du Comté prévoient cependant la possibilité de saler ce fromage en saumure pendant une durée inférieure ou égale à 12 heures ,

– le salage mixte dans lequel les fromages sont dans un premier temps salé en saumure immédiatement après leur fabrication, puis au gros sel pendant la durée de l'affinage . Ces techniques sont généralement utilisées pour saler le Beaufort et le Gruyère .

Le brevet US 3.798.340 décrit une méthode de salage de fromages comprenant l'application sur le fromage d'une enveloppe dans laquelle est absorbée de la saumure , l'ensemble étant enveloppé dans un film imperméable . Selon cette méthode , les fromages ne sont donc pas immergés dans la saumure mais sont salés à l'aide d'une enveloppe absorbante .

Outre le salage , les fromages du type pâte pressée cuite à croûte emmorgée ( Comté , Beaufort ) sont au cours de l'affinage frottés et retournés deux à trois fois par semaine . Dans la plupart des cas, ces soins réalisés manuellement représentent une charge en main d'oeuvre importante .

Pour les fromages du type Emmental , le séjour en cave varie entre 40 et 80 jours et les soins se limitent , dans la plupart des cas , à un à deux retournements par quinzaine et à un grattage de la croûte en fin d'affinage pour éliminer toutes les moisissures qui se sont développées sur les fromages durant cette période . Les soins sont dans ce cas la plupart du temps mécanisés, ce qui diminue le coût de la main d'oeuvre .

Une technique d'affinage des meules d'Emmental en sac plastique microperforé est connue .

Elle comprend la mise sous sac plastique de fromages démoulés puis saumurés , suivie d'un affinage conventionnel , la température de la cave chaude étant de 20°C .

Cependant , du fait de la température d'affinage élevée , il y a apparition de matière grasse liquide entre le fromage et le sac , ce qui occasionne un dégagement d'odeurs désagréables à l'ouverture des sacs .

On connaît aussi des procédés de traitement de morceaux de fromages nécessitant l'emploi de films plastiques . Ainsi le brevet suisse 428.406 a pour objet un procédé de salage de morceaux d'Emmental dans lequel des morceaux d'un caillé, présalé en saumure, sont introduits dans des sacs de film plastique contenant une solution de saumurage.

Le film utilisé doit donc être imperméable à la saumure.

Le brevet US 2.494.636 concerne aussi un procédé de traitement de morceaux de fromages . Le bloc de caillé est trempé dans la saumure puis , sans étape d'affinage , est découpé en petites portions qui sont introduites dans une deuxième solution de saumure . Après séchage, les portions sont enveloppées dans de la cire , de la paraffine ou du cellophane puis sont mises à affiner .

Ces deux procédés ne concernent donc que le traitement de morceaux de fromages et non de meules de fromages entières . Les problèmes à résoudre sont donc différents .

La mise sous sac plastique est aussi utilisée pour le stockage à 4°C d'Emmentals venant d'être saumurés, avant les phases d'affinage conventionnelles.

Toutes les techniques de salage précédemment décrites présentent des inconvénients notables .

Les techniques de salage par frottage nécessitent une main d'oeuvre importante ou un matériel adapté d'automatisation ce qui augmente le coût de production du fromage . Egalement , le salage par saumure ne peut être appliqué à tous les fromages.

Par ailleurs , lorsque ces techniques sont manuelles , il existe une grande variabilité dans la qualité du produit final .

Le demandeur a donc cherché à mettre au point une technique d'affinage des produits fromagers du type pâte pressée cuite , qui puisse être mise en oeuvre sur tous les types de fromages , et qui nécessite une charge en main d'oeuvre réduite .

Selon l'invention , on a trouvé de manière surprenante que l'on peut obtenir de tels résultats par double salage des produits fromagers dans de la saumure , et conservation sous film plastique perméable aux gaz et à la vapeur d'eau .

Il a été montré de manière encore plus surprenante que cette technique permet d'obtenir des produits fromagers présentant une flore de microorganismes moins dense et une moindre déshydratation superficielle au niveau de la croûte , tout en conservant les qualités organoleptiques traditionnelles de ces types de fromages .

On notera que certains procédés de la technique antérieure , utilisés pour la fabrication d'Emmental , mettent en oeuvre, comme on l'a indiqué précédemment , une technique de saumurage et de mise en sac plastique , l'affinage en sac étant unique et prolongé pendant environ 2 mois . Toutefois , cette technique est forcément limitée par la quantité de sel pouvant pénétrer par osmose dans le coeur du fromage. La teneur maximale en sel peut atteindre 0,5 à 0,7%.

Selon l'invention, on prévoit de réaliser deux salages , de préférence deux saumurages successifs séparés par une période d'affinage sans mise en contact avec du sel , cette période pouvant par exemple être de l'ordre d'un mois . Après le premier salage ou saumurage , le sel migre vers le coeur du produit fromager et , lors du deuxième salage ou saumurage , une quantité supplémentaire de sel peut pénétrer dans la masse .

Selon la caractéristique essentielle de l'invention, les produits fromagers obtenus, lorsque les deux étapes de salage ou saumurage sont suivies d'un affinage sous film plastique perméable aux gaz et à la vapeur d'eau, possèdent une croûte propre et poreuse, à la différence des fromages traditionnels qui possèdent une croûte dure .

Sous sa forme générale , l'invention a pour objet un procédé pour l'obtention de produits fromagers à pâte cuite , lequel procédé , après la fabrication traditionnelle des produits moulés , comprend deux étapes successives de salage , chacune d'elle étant suivie d'une étape d'affinage en cave sans salage en surface pendant laquelle les produits fromagers sont mis sous film scellé perméable aux gaz et à la vapeur d'eau.

Avantageusement , les deux étapes de salage sont suivies d'un affinage sous film plastique perméable aux gaz et à la vapeur d'eau . Mais , en variante , il est également possible d'effectuer l'affinage suivant la première étape de salage sous film perméable aux gaz et à la vapeur d'eau et l'affinage suivant la deuxième étape de salage selon une technique d'affinage traditionnelle , ce qui correspondrait alors à un procédé de salage ou saumurage mixte . Dans ce dernier cas , les produits fromagers obtenus possèdent une croûte de caractéristiques comparables à celles des fromages traditionnels de ce type .

Selon un mode de mise en oeuvre préférentiel de l'invention, les produits fromagers sont salés par immersion dans un bain de saumure , préférentiellement à une concentration d'environ 220 à 270 g/l de chlorure de sodium .

La durée de l'immersion est avantageusement de 20 à 48 heures et préférentiellement d'environ 36 heures .

Les avantages de ce procédé sont nombreux . Il permet notamment une économie de main d'oeuvre au niveau des soins en cave . En outre , la perte en extrait sec du produit fromager au cours de l'affinage est limitée , ce qui permet d'affiner des produits fromagers à pâte cuite ayant des formats réduits par rapport aux produits conventionnels , c'est-à-dire aux produits que l'on trouve habituellement dans le commerce .

Le double salage pratiqué sur les meules permet de dessécher partiellement la surface du produit fromager et rend possible l'affinage sous sac perméable aux gaz et à la vapeur d'eau dans de bonnes conditions pendant une durée de six mois . En durcissant la croûte , il améliore également la tenue du produit fromager au cours de son affinage . En effet , le développement de la plupart des microorganismes sur la surface est partiellement inhibé et les contaminations dues à des microorganismes , provenant des locaux ou du matériel sont supprimées .

La technique de double salage selon l'invention permet d'augmenter par saumurage le taux de sel des produits fromagers pour lesquels cette opération était impossible , comme les produits de type Comté et d'augmenter la teneur en sel dans les produits fromagers qui étaient déjà salés par saumurage , comme les produits de type Emmental , et ainsi de rehausser le goût de ce type de fromages .

La mise sous films plastiques perméables aux gaz et à la vapeur d'eau des produits fromagers rend possible le double saumurage et permet de conserver une croûte propre et poreuse .

L'homme du métier dispose de films plastiques perméables aux gaz et à la vapeur d'eau pouvant répondre aux besoins de l'invention et pourra choisir les films les plus appropriés à la fabrication du produit fromager considéré, après des essais de routine préalables .

De tels films doivent permettre les échanges gazeux afin que les gaz produits par les fromages puissent diffuser à l'extérieur du film .

Avantageusement , ils sont perméables au gaz carbonique et à la vapeur d'eau et peuvent être aussi perméables à d'autres gaz tels que l'oxygène et l'azote en particulier .

A titre illustratif , un film qui a donné de bons résultats est un complexe polyéthylène haute densité-polyamide modifié - copolymère de polyéthylène et d'éthylène vinylacétate , en particulier celui disponible sur le marché sous la dénomination EMVAC-DAE 3/110 de la Société SUDPACK Verpackungen GmbH dont les perméabilités aux gaz , exprimées en $cm^3/m^2/24h/atm/20°C$ à 75 % d'humidité relative, sont respectivement $O_2$: 300; $CO_2$: 1200; $N_2$: 200 et la perméabilité à la vapeur d'eau mesurée à 85% d'humidité relative et exprimée en $g/m^2/24h/20°C$ est supérieure à 1.

La première étape d'affinage après le premier salage du procédé selon l'invention peut être effectuée après un séjour en cave froide ( pré-affinage ) et avoir une durée de 20 à 60 jours et préférentiellement d'environ 30 jours .

La seconde étape d'affinage après le deuxième salage peut comprendre un séjour en cave chaude dont la durée est préférentiellement comprise entre 40 et 60 jours environ et optionnellement un séjour en cave froide ( stockage ) de l'ordre de 30 à 120 jours environ .

Les températures préférentielles des chambres froides pour le pré-affinage sont comprises respectivement entre 10 et 14°C . Celles des chambres chaudes sont comprises préférentiellement entre 16°C et 20°C et sont avantageusement d'environ 18°C .Celles des caves froides ( stockage ) sont comprises entre 4 et 10°C .

Dans le cas où l'on désire stocker le produit avant son affinage , la première étape d'affinage du procédé selon l'invention peut être effectuée en cave de stockage à 4°C pendant 30 à 120 jours . Cette phase remplace celle du pré-affinage .

Dans un mode de mise en oeuvre préférentiel de l'invention, les produits fromagers affinés par ce procédé sont du type Comté .

La présente invention a également pour objet des produits fromagers à pâte cuite pouvant être obtenus par le procédé précédemment décrit , présentant une diminution relative d'au minium 7% et de préférence d'au moins 10% par rapport aux fromages à pâte cuite conventionnels du même type , du pourcentage d'extrait sec dans leur couche superficielle sans modification notable de leurs qualités organoleptiques . La couche superficielle est définie dans la présente demande comme la couche ayant une épaisseur d'environ 3 mm qui est présente à la surface des fromages .

De tels produits fromagers peuvent présenter un extrait sec dans leur masse compris entre 62 et 66 et préférentiellement entre 63 et 64 g pour 100 g de produit fromager .

Une telle diminution de l'extrait sec en surface du produit fromager , entraîne une diminution de l'épaisseur de la croûte , et ainsi un gain en produit consommable .

De tels produits fromagers ont aussi préférentiellement une densité microbienne sur la surface 500 fois et préférentiellement 1000 fois plus faible que celle de fromages à pâte cuite conventionnels du même type .

De tels produits fromagers peuvent présenter de plus une augmentation relative de leur teneur en chlorure de sodium , exprimée en gramme pour 100 grammes de produit fromager , dans leur masse d'au minimum 20% par rapport aux fromages à pâte cuite conventionnels du même type . De tels produits fromagers peuvent notamment présenter des teneurs en chlorure de sodium d'au minimum 1,10 g pour 100 grammes de produit fromager .

Cette augmentation de la teneur en sel améliore la conservation et les qualités organoleptiques des produits fromagers .

Mais si l'on désire limiter la teneur en sel à des valeurs traditionnelles , ou même inférieures , il suffit de réduire la durée des opérations de saumurage.

Les produits fromagers précédemment décrits sont préférentiellement du type Emmental , Comté , Gruyère, Beaufort et autres .

Il est à noter que l'absence de croûte et l'homogénéité de la pâte de ces fromages les prêtent à la vente sous forme de portions préemballées .

La présente invention sera illustrée sans pour autant être limitée par les exemples qui suivent en référence aux dessins annexés sur lesquels :

La figure 1 est un diagramme résumant les étapes constituant le procédé selon l'invention.

La figure 2 représente une meule de produit fromager vue de dessus , sur laquelle sont indiqués les emplacements des prélèvements effectués .

La figure 3 représente un prélèvement effectué dans une meule de produit fromager ; les différentes parties du prélèvement sont indiquées sur cette figure.

## EXEMPLE 1

### Description de la technique du double salage et de l'affinage en sac selon l'invention.

Après démoulage , les meules de fromages sont salées par immersion dans une saumure renfermant entre 220 et 260 g de sel par litre pendant 36 heures .

Après ressuyage de la croûte , les meules sont placées dans des sacs plastiques en film de porosité 3 ( Sudpack commercialisés en France par PACK Emballage Sarl), scellés sous vide et rétractés . Après ce conditionnement , les produits fromagers sont placés en cave de pré-affinage à une température de 14°C pendant une durée d'un mois .

A la fin du pré-affinage , les meules sont retirées des sacs et subissent un deuxième salage en saumure identique au premier . Après ressuyage de la croûte , chaque meule est de nouveau placée dans un sac ( même référence ) scellé sous vide et rétracté dans lequel il séjournera jusqu'à sa commercialisation.

Ces produits fromagers subissent ensuite le cycle classique de l'affinage des fromages de type Comté , soit un séjour de 40 à 60 jours en cave chaude et de 30 à 120 jours en cave froide dans l'attente de la commercialisation .

Dans cette technique d'affinage , les soins se limitent à deux retournements en cave chaude et un retournement par mois en cave froide .

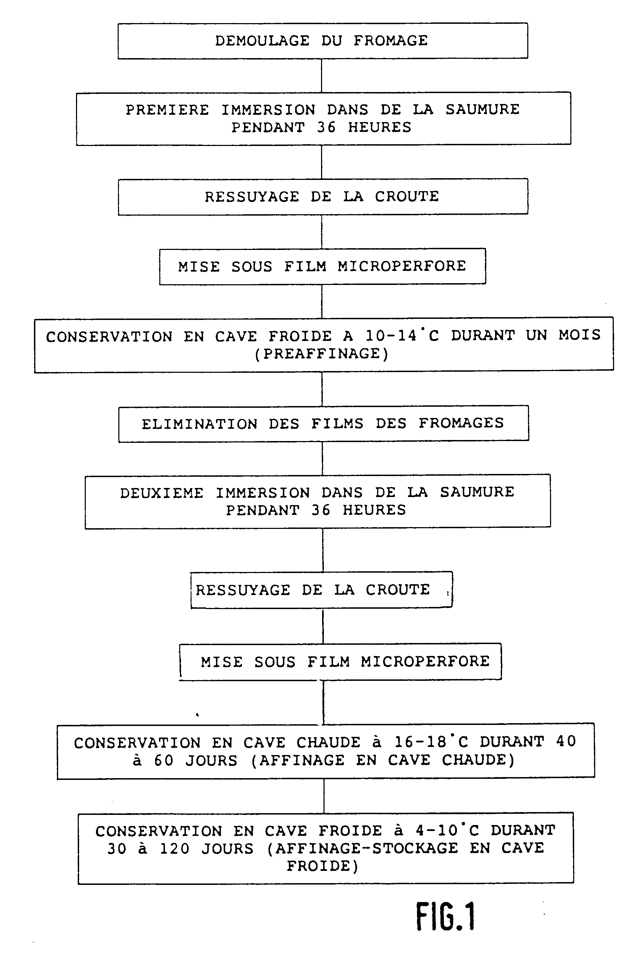

Ces étapes sont résumées dans le diagramme de la figure 1 .

## EXEMPLE 2

### Comparaison de la technique d'affinage selon l'invention par rapport à l'affinage traditionnel du Comté .

### 1. Prélèvements des échantillons .

16 Comtés collectés dans 4 fromageries différentes 24 heures après le démoulage ont été divisés en 2 lots identiques à raison de 8 fromages témoins et de 8 essais . Chaque paire ( Essai , Témoin) est issue d'une même cuve de fabrication (fromages dits " frères " en terme de métier ).

Les conditions d'affinage , température et humidité des caves et durée , sont les mêmes pour les deux lots .

## TABLEAU I

### Conditions de pré-affinage et d'affinage

|  | Température en °C | Hygrométrie en % | Durée en jours |
|---|---|---|---|
| Pré-affinage | 14 | 90 | 30 |
| Affinage | 18 | 92 | 50 |
| Stockage | 7 | 90 | 40 |

Soins en cave .

– Lot témoin : ces fromages reçoivent des soins traditionnels affectés à l'affinage du Comté (salage gros sel , frottage , retournement ).
– Lot essai : ces produits fromagers ont été affinés en utilisant la technique du double salage associé au film perméable aux gaz et à la vapeur d'eau.

### 2. Description des analyses effectuées

### 2.1 - Analyses chimiques ( extrait sec et sel )

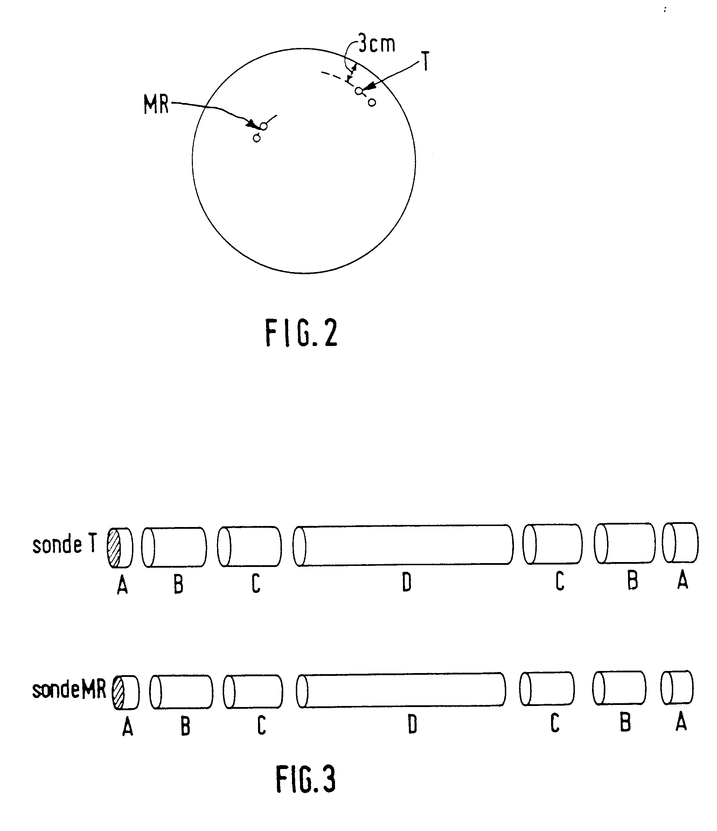

Toutes les meules ont été échantillonnées après 120 jours d'affinage en prélevant sur chacune d'elles à l'aide d'un emporte-pièce de 20 mm de diamètre sur toute l'épaisseur du fromage deux sondes en milieu de rayon (MR) et deux sondes en talon (T) comme indiqué sur la figure 2 qui est une vue de dessus d'une meule .
Les analyses ont été effectuées sur une sonde. de talon et une sonde de milieu de rayon.
Pour connaître plus en détail l'hétérogénéité des fromages , les deux autres sondes ( MR et T ) après élimination par grattage de la morge , ont été découpées en 7 zones parallèles comme indiqué sur la figure 3 dans laquelle :
A représente deux parties corticales de 3 mm d'épaisseur ( Zone A).
B représente deux parties corticales de 1 cm d'épaisseur ( zone B).
C représente deux parties intermédiaires de 1 cm d'épaisseur ( zone C ) .
D représente une partie centrale de dimension variable en fonction de l'épaisseur du fromage ( zone D ) .
Les zones des deux sondes portant les mêmes identifications ont été regroupées pour ne constituer qu'un seul échantillon.

### 2.2. Analyses microbiologiques

### 2.2.1 Prélèvements .

Les prélèvements ont été effectués après quatre mois d'affinage sur chaque meule , en prélevant par grattage à l'aide d'une spatule désinfectée à l'alcool la morge présente sur une surface de 50 cm$^2$ . La morge recueillie sur les huit fromages du même lot est réunie pour constituer un échantillon moyen .

### 2.2.2. Dénombrements microbiens .

On a utilisé les milieux de culture et la méthodologie décrits par Piton C. ( " Evolution de la flore microbienne de surface du Gruyère de Comté au cours de l'affinage " , Le Lait , 1988, 68 (4) , 419-434) pour effectuer la numération des principaux groupes microbiens rencontrés sur la surface des fromages .

### 2.3. Analyses sensorielles

L'évaluation des caractères organoleptiques des fromages témoins et essais a été réalisée par le jury de dégustation de l'INRA de Poligny . Les différentes propriétés des fromages ont été notées chaque fois sur une

6

échelle de 0 à 5 . Chaque valeur provient de la moyenne des notes données pour les 14 personnes composant le jury de dégustation .

### 3. Résultats

#### 3.1. Analyses physico-chimiques ( extrait sec et sel).

Les résultats sont reportés dans le tableau II ci-après .

L'examen des teneurs en sel des produits fromagers du lot essai montre qu'il est possible d'atteindre par la technique de salage selon l'invention des teneurs absolues en sel supérieures à 1% (1,15 à 1,25 g/l).

L'augmentation relative de la teneur en sel pour 100 grammes de produit est d'au minimum 20% quel que soit la zone prise en considération.

On peut , par cette technique de salage en diminuant les durées de saumurage , obtenir des teneurs absolues en sel comprises entre 0,5 et 1,25%.

L'extrait sec des produits fromagers affinés selon cette technique est plus homogène que celle des témoins (74,04 à 63,35 pour le témoin ; 63,40 à 64,57 pour l'essai ) .

Les résultats du tableau II montrent que l'extrait sec en surface (A) peut présenter une diminution relative , par rapport aux fromages à pâte pressée cuite conventionnels , ( témoin ) de 12,7 %.

Les pertes en eau au cours de l'affinage du lot essai sont réduites en moyenne de 2,3 % . Cette diminution de la freinte au cours de l'affinage représente une économie importante.

TABLEAU II : Comparaison des teneurs en extrait sec et en sel après 4 mois d'affinage

| Zone analysée | | Extrait sec en g/100g | | Sel en g/100g | |
|---|---|---|---|---|---|
| | | X | ET | X | ET |
| A | témoin | 74,02 | 1,32 | 0,80 | 0,31 |
| | essai | 64,57 | 1,16 | 1,21 | 0,29 |
| B | témoin | 66,47 | 1,03 | 0,95 | 0,34 |
| | essai | 63,79 | 0,76 | 1,23 | 0,21 |
| C | témoin | 63,93 | 0,81 | 0,96 | 0,29 |
| | essai | 63,37 | 0,59 | 1,20 | 0,26 |
| D | témoin | 63,55 | 0,69 | 0,92 | 0,29 |
| | essai | 63,49 | 0,37 | 1,19 | 0,26 |
| T | témoin | 65,03 | 0,88 | 0,89 | 0,31 |
| | essai | 63,54 | 0,69 | 1,15 | 0,34 |
| MR | témoin | 65,19 | 0,62 | 0,89 | 0,15 |
| | essai | 63,67 | 0,42 | 1,25 | 0,51 |

X : moyenne des résultats

ET : écart-type .

EP 0 501 891 A1

3.2. Analyses microbiologiques

TABLEAU III : Dénombrement microbien

Nombre de microorganismes/cm²

| GROUPES MICROBIENS | ESSAI | TEMOIN |
|---|---|---|
| Flore à gram négatif | $1,02.10^2$ | $2,48.10^6$ |
| Levures et moisissures | $2,54.10^6$ | $8,39.10^5$ |
| Flore halotolérante | $2,53.10^6$ | $4,77.10^9$ |
| Flore totale | $6,82.10^6$ | $7,01.10^9$ |

Si la présence d'un nombre élevé de microorganismes sur le lot témoin est normal , le fait d'obtenir une population microbienne plus faible ( lot essai ) est particulièrement intéressant pour les produits destinés à une vente en portions sous forme préemballée .

Pour cette forme de vente , les pré-emballeurs recherchent des produits fromagers ayant une flore de surface peu abondante . Les produits affinés par la technique selon l'invention conviennent parfaitement pour cette forme de commercialisation.

Dans cette étude , le problème des germes pathogènes n'a pas été abordé ( Listeria, etc.) mais au vu des résultats bactériologiques , on peut considérer que les produits fromagers essais protégés par leurs sacs composés de film perméable aux gaz et à la vapeur d'eau , sont d'une manière générale moins sujets aux contaminations par des germes pathogènes ou autres , venant de l'air ambiant ou des contacts avec le personnel .

3.3. Analyses sensorielles

L'évaluation des caractères organoleptiques des fromages témoins et de produits fromagers essais , réalisée par le jury de l'INRA Poligny , montre que les caractères organoleptiques sont peu différents comme l'indique le tableau IV ci-après qui donne les valeurs moyennes obtenues lors de la dégustation après 120 jours d'affinage .

Il est à noter que certains paramètres peuvent être modifiés sans que l'on observe des variations notables dans la qualité des produits obtenus . Par exemple :

– si l'on souhaite des teneurs en sel inférieures à 1% , on peut diminuer les temps de saumurage . La qualité du produit fini ne sera pas modifiée ,

– les températures et les durées d'affinage et de pré-affinage peuvent varier en fonction de la qualité de la matière première et du type de produit que l'on souhaite obtenir ,

– tous les films plastiques perméables aux gaz et à la vapeur d'eau ayant des caractéristiques comparables à celles qui ont été utilisées , peuvent convenir pour cet affinage .

**TABLEAU IV:**
Moyenne des notes données par les 14 personnes composant le jury

| PRODUIT | GOUT | | | QUALITE DE LA PATE | | | |
|---------|--------|----------|--------------|--------|------------|----------|------------|
|         | Fruité | Amertume | Mauvais goût | Dureté | Elasticité | Collante | Granuleuse |
| TEMOIN  | 2.62   | 1.77     | 1.64         | 2.72   | 2.57       | 1.69     | 1.86       |
| ESSAI   | 2.61   | 1.93     | 1.66         | 3.13   | 2.48       | 1.71     | 2.12       |

EP 0 501 891 A1

**Revendications**

1. Procédé pour l'obtention de produits fromagers à pâte pressée cuite , lequel procédé , après la fabrication traditionnelle des produits moulés , comprend deux étapes successives de salage , chacune d'elle étant suivie d'une étape d'affinage en cave , sans salage en surface , pendant laquelle les produits fromagers sont mis sous film scellé perméable aux gaz et à la vapeur d'eau.

2. Procédé selon la revendication 1, caractérisé en ce que la seconde étape d'affinage est effectuée selon une technique d'affinage traditionnelle.

3. Procédé selon l'une des revendications 1 et 2 , caractérisé en ce que les produits fromagers sont salés par immersion dans un bain de saumure , préférentiellement à une concentration d'environ 200g à 270 g/l de chlorure de sodium.

4. Procédé selon l'une des revendications 1 et 3 , caractérisé en ce que la durée de l'immersion est de 20 à 48 heures et préférentiellement d'environ 36 heures .

5. Procédé selon l'une des revendications 1 à 4 , caractérisé en ce que la durée de l'étape d'affinage suivant la première étape de salage est de 20 à 40 jours et préférentiellement d'environ 30 jours.

6. Procédé selon l'une des revendications 1 à 5 , caractérisé en ce que l'étape d'affinage suivant la seconde étape de salage est effectuée en cave chaude et est comprise entre 40 et 60 jours environ .

7. Procédé selon la revendication 6 , caractérisé en ce que le séjour en cave chaude est suivi d'un séjour en cave froide de l'ordre de 30 à 120 jours environ.

8. Procédé selon l'une des revendications 1 à 7 , caractérisé en ce que les produits fromagers sont de type Comté .

9. Produits fromagers à pâte pressée cuite présentant une diminution relative d'au minimum 7 % et de préférence de 10 % par rapport aux fromages à pâte pressée cuite conventionnels du même type , du pourcentage d'extrait sec dans leurs couches superficielles , sans modification notable de leurs qualités organoleptiques et présentant une augmentation relative de leur teneur en chlorure de sodium pour 100 grammes de produit fromager dans leurs masses d'au minimum 20% par rapport aux fromages à pâte pressée cuite conventionnels du même type .

10. Produits fromagers selon la revendication 9 , caractérisés en ce qu'ils présentent un extrait sec dans leur masse compris entre 62 et 66 et préférentiellement entre 63 et 64 g/100 g de produit fromager .

11. Produits fromagers selon la revendication 9 , caractérisés en ce que la densité microbienne en surface est 500 fois et préférentiellement 1000 fois plus faible que celle de fromages à pâte pressée cuite conventionnels du même type .

12. Produits fromagers selon la revendication 9 , caractérisés en ce qu'ils présentent une teneur en chlorure de sodium d'au minimum 1,10 g pour 100 grammes de produit fromager .

13. Produits fromagers selon l'une des revendications 9 à 12 , caractérisés en ce qu'ils sont du type gruyère .

| DEMOULAGE DU FROMAGE |
| --- |

| PREMIERE IMMERSION DANS DE LA SAUMURE PENDANT 36 HEURES |
| --- |

| RESSUYAGE DE LA CROUTE |
| --- |

| MISE SOUS FILM MICROPERFORE |
| --- |

| CONSERVATION EN CAVE FROIDE A 10-14°C DURANT UN MOIS (PREAFFINAGE) |
| --- |

| ELIMINATION DES FILMS DES FROMAGES |
| --- |

| DEUXIEME IMMERSION DANS DE LA SAUMURE PENDANT 36 HEURES |
| --- |

| RESSUYAGE DE LA CROUTE |
| --- |

| MISE SOUS FILM MICROPERFORE |
| --- |

| CONSERVATION EN CAVE CHAUDE à 16-18°C DURANT 40 à 60 JOURS (AFFINAGE EN CAVE CHAUDE) |
| --- |

| CONSERVATION EN CAVE FROIDE à 4-10°C DURANT 30 à 120 JOURS (AFFINAGE-STOCKAGE EN CAVE FROIDE) |
| --- |

FIG.1

FIG.2

sonde T

A  B  C  D  C  B  A

sonde MR

A  B  C  D  C  B  A

FIG.3

Office européen
des brevets

# RAPPORT DE RECHERCHE EUROPEENNE

Numero de la demande

EP    92 40 0518

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D<br>A | US-A-3 798 340 (G.REINBOLD ET AL.)<br>* colonne 1, ligne 49 - colonne 2, ligne 55; revendication 1; exemple 1 *<br>* colonne 3, ligne 38 - ligne 49 *<br>* colonne 5, ligne 47 - ligne 62 *<br>--- | 9-13<br>1-4,6-8 | A23C19/064<br>A23C19/14<br>A23C19/068<br>A23C19/16 |
| D,X | CH-A-428 406 (NATIONAL DAIRY PRODUCTS CO)<br>* colonne 3, ligne 42 - ligne 50; revendication 1; exemples 1-4 *<br>--- | 9-13 | |
| A,D<br>X | US-A-2 494 636 (J.STINE)<br>* colonne 5, ligne 8 - colonne 6, ligne 9; revendication 1 *<br>* colonne 3, ligne 30 - ligne 37 *<br>--- | 1,3,6,7<br>9-13 | |
| A | EP-A-0 384 553 (GRACE GMBH)<br>* page 1, ligne 35 - page 4, ligne 31; revendication 1 *<br>--- | 1 | |
| A | EP-A-0 404 704 (UCAFO)<br>* revendications 1,4-7; exemple 1 *<br>----- | 1 | **DOMAINES TECHNIQUES RECHERCHES (Int. Cl.5)**<br><br>A23C |

Le présent rapport a été établi pour toutes les revendications

| Lieu de la recherche | Date d'achèvement de la recherche | Examinateur |
|---|---|---|
| LA HAYE | 09 JUIN 1992 | DESMEDT G.R.A. |